Europäisches Patentamt

(19) European Patent Office

Office européen des brevets

(11) Publication number: **0 004 709**

A1

(12) # EUROPEAN PATENT APPLICATION

(21) Application number: **79300347.6**

(22) Date of filing: **07.03.79**

(30) Priority: 09.03.78 GB 946578
31.05.78 GB 946578

(43) Date of publication of application:
17.10.79 Bulletin 79/21

(84) Designated Contracting States:
CH DE FR IT

(51) Int. Cl.²: **H 04 M 1/64**

(71) Applicant: **ANSAFONE LIMITED**
Lyon Way Frimley Road
Camberley Surrey GU16 5EY(GB)

(72) Inventor: **Rawling, Howard Simpson**
4 Lane End Close Shinfield
Reading Berkshire(GB)

(72) Inventor: **Gillott, Ralph**
16 Hamesmoor Road Mytchett
Camberley Surrey GU16 6JB(GB)

(74) Representative: **Pritchard, Colin Hubert et al,**
Mathys & Squire 10 Fleet Street
London EC4Y 1AY(GB)

㊺ Improvements in or relating to telephone answering machines.

(57) An input circuit for a telephone answering machine. The circuit includes a first detector which gives a full-wave rectified output representing an incoming ringing signal or an outgoing dialling signal on a telephone line connected to the machine. The first detector is coupled via a delay to a first input of a Schmitt Trigger circuit. A second detector is coupled to a high-pass filter which blocks an incoming ringing signal but passes high frequency components of an outgoing dialling signal. The second detector, which also gives a full-wave rectified output, is coupled via a pulse stretch circuit to an inhibit input to the Schmitt Trigger circuit. The Schmitt Trigger circuit gives an output signal if there is an output from the first detector but no output from the second detector ie, only if there is an incoming ringing signal. Each of the detectors includes a differencing amplifier having resistors connected to its first and second inputs so that the application of an a.c. voltage causes a greater current to flow to the second input then to the first input. A source of direct current is connected to the first input and the ringing or dialling signal is applied to the second input. When the alternating signal voltage makes an excursion in one sense, the current flow into the second input is greater than the sum of the current flows into the first, and the output voltage of the amplifier moves in one direction. When the alternating voltage signal makes an excursion in the opposite sense, the current flow into the first input is reduced to zero and the output of the amplifier again moves in the one direction.

·/· · ·

EP 0 004 709 A1

Fig.1

-1-

This invention relates to telephone answering machines.

A telephone answering machine must be provided with an input circuit which can detect an incoming ringing signal on a telephone line to which the machine is connected. The ringing signal from a local exchange is usually made up of bursts of a signal having a sinusoidal waveform. The frequency of the signal varies from country to country, typical values being 16.3/3, 25 and 50 Hz. The amplitude ranges from 17 to 100 volts r.m.s.

The machine is required to discriminate against a dialling signal on the telephone line, produced by a local contact set which successively short-circuits and open-circuits the telephone line. The resulting signal is a series of pulses having an amplitude of about 80 volts peak to peak and a repetition frequency of about 10 Hz. The pulses have a slowly rising leading edge and a rapidly falling trailing edge. The rate of change of the trailing edge is at least as fast as the rate of change of a 4 KHz sinusoidal voltage of amplitude 12 volts peak to peak.

Known input circuits rely upon the difference between the amplitudes or frequencies of ringing and dialling signals to discriminate between these two kinds of signals.

According to the present invention there is provided an input circuit for a telephone answering machine which is adapted to detect an incoming ringing signal on a telephone to which the machine is connected by which is insensitive to an outgoing dialling signal from a local handset, the ringing signal having a sinusoidal or generally sinusoidal waveform and a low frequency and the dialling signal having a waveform which includes a sharp edge representing a rapid change in voltage, the input circuit comprising a first detector circuit which is sensitive to the said incoming ringing signal and to components of the said dialling signal which are of low frequency, the first detector circuit having an output which is switched to a first predetermined condition if either a ringing signal or a low frequency component of a dialling signal is sensed thereby, a second detector circuit which is sensitive to components of the said dialling signal which are of higher frequency but which is insensitive to the said ringing signal, the second detector circuit having an output which assumes a second predetermined condition if a dialling signal is sensed thereby, means for coupling inputs to respective first and second detector circuits to a telephone line, and means coupling the outputs of the first and second detector circuits to gating means, the gating means providing an output signal only if the output of the first detector circuit is in the first predetermined condition and the output of the second detector circuit is not in the second predetermined condition.

According to the invention there is also provided a circuit whose output voltage is made up of excursions in a single predetermined direction for both positive and negative excursions of an alternating voltage applied thereto, the circuit comprising an amplifier having first and second inputs, the amplifier being such that supplying the second input with a current which is equal in magnitude and of the same direction as current flowing into the first input or reducing the current supplied to the first input to zero or below causes an excursion in the said predetermined direction of the output voltage of the amplifier, first and second resistive means connected to respective first and second inputs, the resistive means being such that the application of an a.c. voltage thereto causes a greater current to be supplied to the second input than to the first input, means for supplying a direct current to the first input, and means for applying an alternating voltage to the first and second resistive means, whereby when the alternating voltage makes an excursion of predetermined magnitude in one sense the current into the second input is greater than the sum of the two currents into the first input and the output of the amplifier then makes a voltage excursion in the said predetermined direction, and when the alternating voltage makes an excursion of predetermined magnitude in the opposit sense the current into the first input is reduced to zero and the output of the amplifier again makes a voltage excursion in the said predetermined direction.

The invention will now be described, by way of example, with reference to the accompanying drawings, in which:-

Figure 1 is a schematic drawing of an input circuit for a telephone answering machine according to the invention;

Figure 2 shows the circuit of Figure 1 in more detail;

Figure 3 is a differencing amplifier included in the circuit of Figures 1 and 2; and

Figure 4 shows the waveforms of voltage signals at various points in the circuit of Figures 1 and 2.

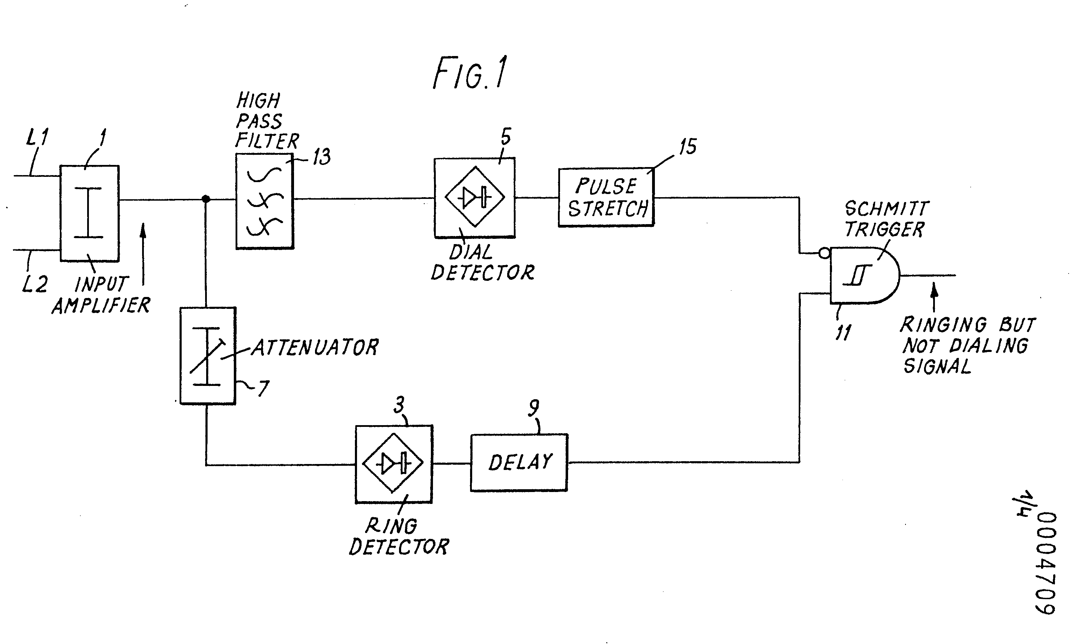

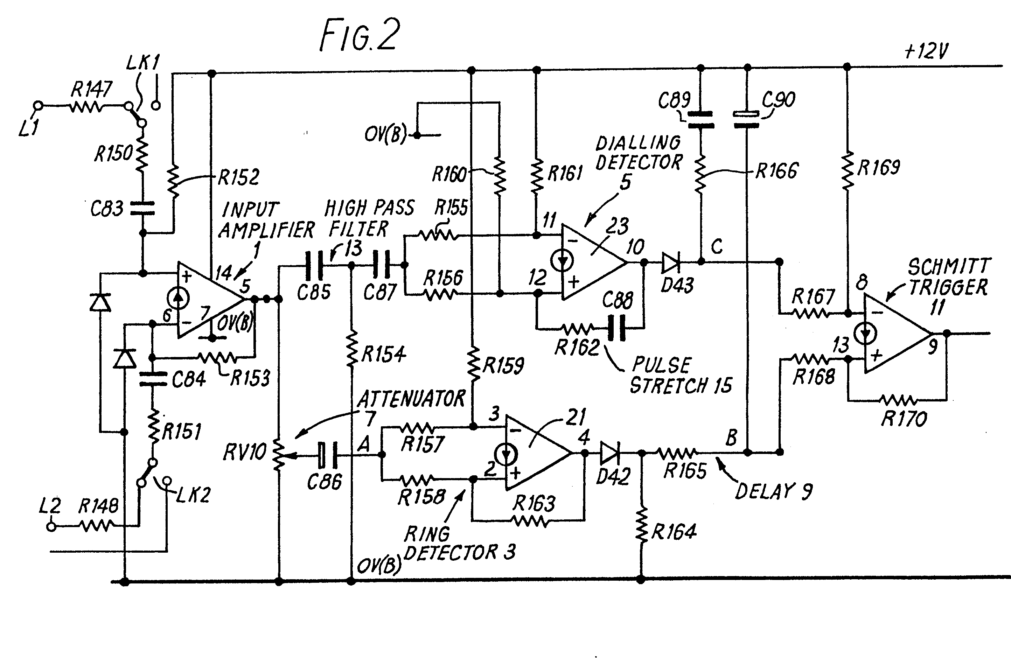

Figures 1 and 2 of the drawings show an input circuit for a telephone answering machine according to the invention, this input circuit being one which is adapted to detect an incoming ringing signal on a telephone line to which the machine is connected but being insensitive to an outgoing signal from a local handset. Discrimination between ringing and dialling signals depends upon the fact that the ringing signals have sinusoidal, or generally sinusoidal waveforms whereas dialling signals are made up of one or more dialling pulses, each pulse having a sharp trailing edge representing a rapid change in voltage. This means that the ringing signal has only low frequency components whereas the dialling signals have both high and low frequency components. The rate of rise or fall of the trailing edge of the dialling signal is equivalent to the maximum rate of rise or fall in a sinusoidal voltage having a frequency at least equal to 2 KHz.

Referring now to Figure 1 of the drawings, the present circuit includes an input amplifier 1 which, in use, is coupled to a telephone line L1,L2. Coupled to an output of the amplifier 1 are a ring detector circuit 3 and a dialling detector circuit 5. The ring detector circuit 3 is coupled to the amplifier 1 via an attenuator 7 and is sensitive to both ringing and dialling signals applied to the telephone line L1,L2. A delay circuit 9 couples an output from the ring detector 3 to gating means in the form of a Schmitt Trigger circuit 11 at an output of the circuit. The dialling detector circuit 5 is coupled to the amplifier 1 via a high pass filter 13 which passes dialling signals but blocks the passage of ringing signals. An output from the dialling detector circuit 5 is coupled to an inhibit-input to the Schmitt Trigger circuit 11 via a 'pulse-stretch' circuit 15.

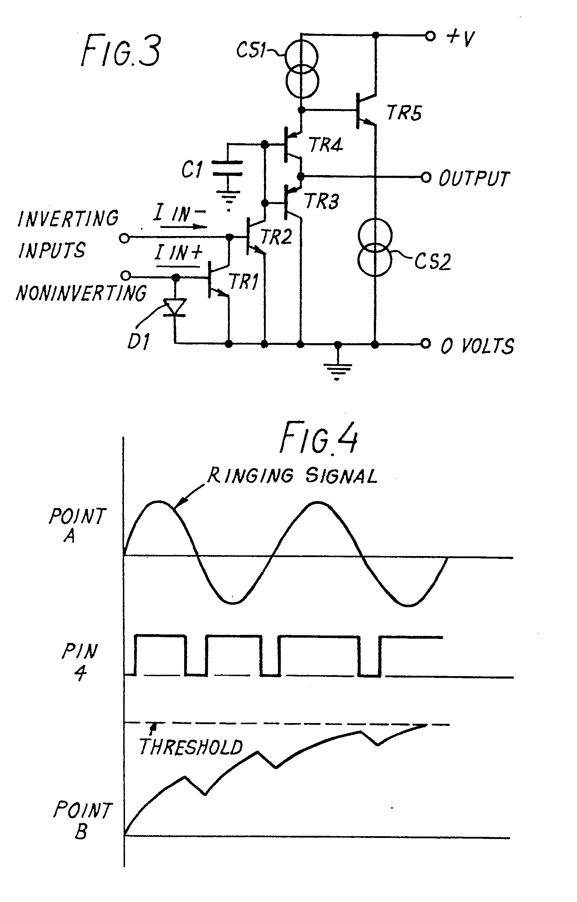

Both the ring detector and the dialling detector include a differencing amplifier of the form shown in Figure 3 of the drawings.

Referring to Figure 3, the differencing amplifier is made up of five transistors TR1 to TR5 together with two constant current sources CS1 and CS2 and an input diode D1. The amplifier has a first, inverting input and a second, non-inverting input and a single output. As shown in Figure 3, the non-inverting input is connected to the base of the transistor TR1 which is connected in a grounded emitter configuration. The diode is connected between the non-inverting input and earth potential. The inverting input to the amplifier is connected to the base of the transistor TR2 and to the collector of transistor TR1.

The transistor TR2 is also connected in a grounded emitter configuration. Its collector is connected to the base electrodes of transistors TR3 and TR4 and is connected to earth potential via a capacitor C1.

Transistor TR3 has its collector grounded and its emitter connected to the collector of transistor TR4. The constant current source CS1 connects the emitter of transistor TR4 to a positive supply line and a direct connection is made from the emitter to the base of transistor TR5.

Transistor TR5 has its collector connected to the positive supply line. Its emitter is connected to earth potential via the second constant current source CS2 and to the junction between the emitter of transistor TR3 and the collector of transistor TR4.

An output from the amplifier is connected to the junction between the emitter of transistor TR5 and the second constant current source CS2.

The output of the differencing amplifier of Figure 3 is below the potential of the positive supply voltage if there is a positive-going current flowing into the inverting input which exceeds the positive-going current into the non-inverting input. If the positive current flowing into the non-inverting input is increased, a current equal in magnitude to the increase is diverted from current flowing into the inverting input. Thus, if the current through the inverting input is 1µA and the non-inverting input current is increased by 1µA, the current into the base of the transistor TR2, which is connected to the inverting input, falls to zero. The transistor TR2 is then cut off. On the other hand, if the current supplied to the inverting input is reduced to zero, the transistor TR2 is again cut off.

In each case, the transistors TR3 and TR4 are cut off and a current from the constant current source CS1 flows into the base of the transistor TR5. The base voltage of the transistor TR5 rises towards the positive supply voltage and its emitter, and hence the output of the amplifier, does likewise.

Referring now to Figures 1 and 2 of the drawings, the input amplifier 1 is an operational amplifier whose inputs are connected to respective conductors L1 and L2 of the telephone line. In the case of an inverting input, connection to the associated conductor L2 of the line is via a capacitor C84, a resistor R151, a switch LK2 and a resistor R148. A non-inverting input is connected to the conductor L1 of the line via a capacitor C83, a resistor R150, a switch LK1 and a resistor R147. A resistor R153 couples an output of the amplifier 1 to the inverting input. The non-inverting input is connected to the positive voltage supply by a resistor R152.

The attenuator 7 which couples the input amplifier 1 to the ring detector circuit 3 consists of a variable resistor RV10 which is connected between the amplifier output and earth potential. A capacitor C86 is connected to a movable contact of the variable resistor RV10.

A resistor R157 connects the capacitor C86 to an inverting input (pin 3) of a differencing amplifier 21 in the ring detector circuit and a resistor R158 connects the capacitor to the non-inverting input (pin 2) of the amplifier. The non-inverting input of the amplifier 21 is also connected via a resistor R159 to the positive supply line. An output (pin 4) of the amplifier 21 is connected to the non-inverting input by means of a resistor R163.

The output of the differencing amplifier 21 is connected via a diode D42 first via a resistor R164 to earth potential and secondly via a resistor R165 to a storage capacitor C90, which form the delay 9. The resistor R165 is also connected via a resistor R168 to an input (pin 13) to the Schmitt Trigger circuit.

The high pass filter 13 which couples the input amplifier 1 to the dialling detector 5 is made up of capacitors C85 and C87 and a resistor R154.

A resistor R155 couples the capacitor C187 to an inverting input of a differencing amplifier 23 in the dialling detector and this inverting input is also connected via a resistor R161 to the positive supply line. A non-inverting input to the amplifier 23 is connected to the capacitor C187 via a resistor R156.

The 'pulse stretch' circuit 15 is formed by a resistor R162 and a capacitor C88 which couple an output of the amplifier 23 to the non-inverting input. The output of the amplifier 23 is also connected to a diode D43, which is in turn connected to the positive supply line via a resistor R166 and a capacitor C89 and to an inhibit input (pin 8) of the Schmitt Trigger circuit via a resistor R167.

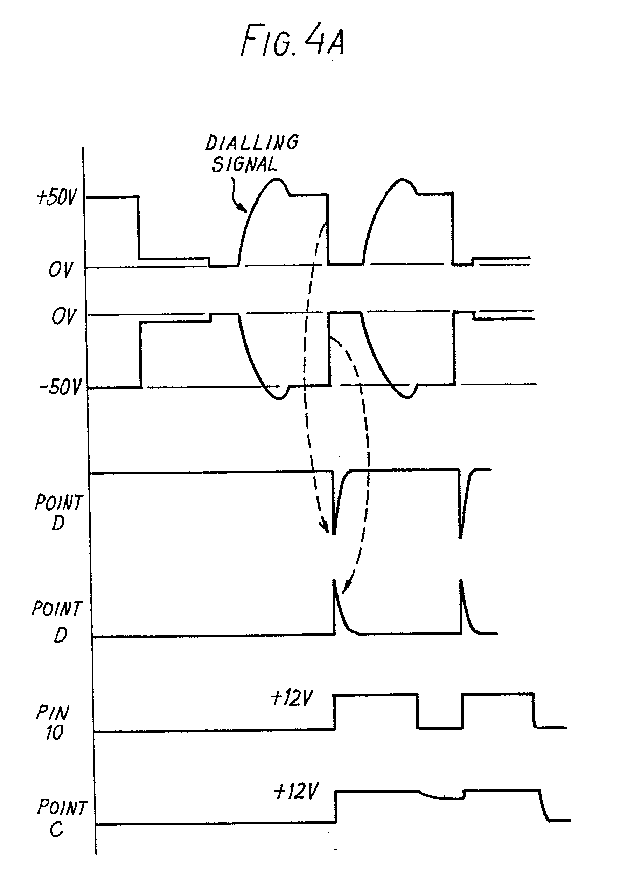

When the present input circuit is in use, the amplifier 1 is connected to the conductors L1,L2 of a telephone line, as described above, and any ringing or dialling signal on the line is applied to the inputs to the amplifier. The voltage waveforms of typical ringing and dialling signals are shown in Figure 4 of the drawings. Both kinds of signal are attenuated by the input amplifier 1, thus ensuring that the shape of each signal is maintained. The attenuated output of the amplifier 1 appears across the variable resistor RV10.

With no ringing or dialling signal applied to the circuit, there is a positive direct current flowing into the inverting input (pin 3) of the amplifier 21. There is no current flowing into the non-inverting input (pin 2). The output of the amplifier is at a negative potential.

When a negative excursion of a ringing or dialling signal is applied to the variable resistor RV10, the potential at the point A of the circuit in Figure 2 is negative. Current flows through the resistors R157 and R159, which act as a potential divider, are then such that the inverting input (pin 3) of the differencing amplifier 21 in the ring detector 3 moves towards zero volts. When the magnitude of the negative excursion is sufficient to cause the inverting input to reach zero volts and to reduce the current flowing into the inverting input to zero or below, the output (pin 4) of the amplifier 21 then assumes a positive potential, as described above in connection with Figure 3.

On a positive excursion of a ringing or dialling signal, the potential at point A is positive. When the magnitude of the positive excursion is sufficient, the current in resistor R158 becomes greater that the sum of the currents in resistors R157 and R159, since resistor R158 has a lower value than resistor R157. This means that the output (pin 4) of the differencing amplifier 21 again assumes a positive potential, again as described above in connection with Figure 3.

The ring detector circuit 3 is therefore effectively equivalent to a full wave rectifier, giving positive output pulses for both positive and negative excursions of an incoming ringing signal or dialling signal.

The rectified output pulses from the ring detector 3 are applied to the series circuit made up of the resistor R165 and the capacitor C90. The voltage across the capacitor C90 rises slowly towards a threshold value of the Schmitt Trigger circuit 11, as shown in Figure 4 of the drawings.

The attenuated ringing and dialling signals from the input amplifier 1 are also applied to the high pass filter 13 made up of the capacitor C85 and C87 and the resistor R154.

The ringing signals, which are low frequency sinusoidal or generally sinusoidal signals, are blocked by the filter 13 and have no effect on the dialling detector 5 connected thereto.

The dialling signals, which contain sharp edges representative of high frequency components, are differentiated by the filter 13 giving the narrow pulse voltages at the point D of Figure 2 which are shown in Figure 4 of the drawings. As shown in Figure 4, some dialling signals are positive-going pulses, in which case their sharp trailing edges give negative-going pulses at the point D. Other dialling signals are negative-going and give narrow positive-going pulses at the point D.

Whether positive- or negative-going pulses appear at the point D, the output voltage at pin 10 of the differencing amplifier 23 in the dialling detector 5 is positive-going, as described above with respect to Figure 3. As shown in Figure 4, the output pulses at the pin 10 are extended in duration relative to the input pulses, this extension resulting from the inclusion of the capacitor C88 in the connection between the output and the non-inverting input of the differencing amplifier 23. The pulses from pin 10 are applied to the R-C network made up of the resistor R166 and the capacitor C89, resulting in a voltage at the point C of Figure 2 which is also shown in Figure 4. This voltage from the point C is applied to the inhibiting input (pin 8) of the Schmitt Trigger circuit 11 via the resistor R167.

If there is no sufficient positive voltage at point C when the voltage at point B of the circuit has reached a predetermined threshold value, the circuit is operated and gives a predetermined output voltage. This situation arises when there is an incoming ringing signal, which has activated the ring detector 3 to give a voltage at point B but has not passed through the high pass filter 13 to activate the dialling detector 5 and give a voltage at the point C.

If there is a sufficient positive voltage at point C when the voltage at point B reaches the threshold value, the Schmitt Trigger circuit 11 is inhibited and gives no predetermined output voltage. This situation arises when there is a dialling signal on the telephone line L1,L2, the dialling signal activating the ring detector 3 to give a voltage at point B and also activating the dialling detector 5 to give a voltage at the point C.

It will be appreciated that each pulse at the pin 10 of the amplifier 23 and the positive voltage at the point C only commences at the end of the first dialling pulse in a train. The delay in the rise of the voltage at point B, imposed by the RC circuit made up of resistor R165 and capacitor C90, is necessary so that the positive pulses from the pine 4 of the amplifier 21 are not applied to the Schmitt Trigger 11 until the positive voltage from point C, if present, has had time to arrive.

The 'pulse stretch' provided by the resistor R162 and the capacitor C88 is necessary to prevent the voltage applied to the inhibiting input of the Schmitt Trigger circuit 11 from falling to zero, and thus removing the inhibiting effect, during a train of dialling pulses, when the positive voltage at point B is still building up towards, and could reach, the threshold voltage.

In the circuit described above the ring detector circuit 3 is sensitive to both high and low frequency components of the dialling signal. An alternative circuit according to the invention has a ring detector which is sensitive only to the low frequency components of the dialling signal.

CLAIMS:-

1.    An input circuit for a telephone answering machine which is adapted to detect an incoming ringing signal on a telephone line to which the machine is connected but which is insensitive to an outgoing dialling signal from a local handset, the ringing signal having a sinusoidal or generally sinusoidal waveform and a low frequency and the dialling signal having a waveform which includes a sharp edge representing a rapid change in voltage, the input circuit comprising a first detector circuit which is sensitive to the said incoming ringing signal and to components of the said dialling signal which are of low frequency, the first detector circuit having an output which is switched to a first predetermined condition if either a ringing signal or a low frequency component of a dialling signal is sensed thereby, a second detector circuit which is sensitive to components of the said dialling signal which are of higher frequency but which is insensitive to the said ringing signal, the second detector circuit having an output which assumes a second predetermined condition if a dialling signal is sensed thereby, means for coupling inputs to respective first and second detector circuits to a telephone line, and means coupling the outputs of the first and second detector circuits to gating means, the gating means providing an output signal only if the output of the first detector circuit is in the first predetermined condition and the output of the second detector circuit is not in the second predetermined condition.

2.    An input circuit as claimed in claim 1, wherein the first detector circuit is also sensitive to the said components of the dialling signal which are of higher frequency.

3.    An input circuit as claimed in claim 1 or 2, wherein the second detector circuit includes a high pass filter which does not produce an output in response to the application thereto of the said ringing signal or the low frequency components of the dialling signal.

4.    An input circuit as claimed in claim 3, wherein the high pass filter produces an output which comprises a voltage pulse of short time duration in response to the sharp edge in the waveform of the dialling signal, and the second detector circuit includes means which are adapted, when one of the voltage pulses from the high pass filter is applied thereto, to generate a pulse of longer duration, whereby the output of the second detector circuit remains in the second predetermined condition during the interval between a pair of successive dialling signals.

5. An input circuit as claimed in any one of the preceding claims, wherein the second detector circuit includes full wave rectifier means, whereby the second predetermined condition is assumed by the output of the second detector circuit when a dialling signal of either polarity is sensed thereby.

6. An input circuit as claimed in claim 5, wherein the first detector circuit also includes full wave rectifier means.

7. An input circuit as claimed in claim 5 or 6, wherein the or each full wave rectifier means comprises an amplifier having first and second inputs, the amplifier being such that supplying the second input with a current which is equal in magnitude and of the same direction as current flowing into the first input or reducing the current supplied to the first input to zero or below causes an excursion in the said predetermined direction of the output voltage of the amplifier, first and second resistive means connected to respective first and second inputs, the resistive means being such that the application of an a.c. voltage thereto causes a greater current to be supplied to the second input than to the first input, means for supplying a direct current to the first input, and means for applying an alternating voltage to the first and second resistive means, whereby when the alternating voltage makes an excursion of predetermined magnitude in one sense the current into the second input is greater than the sum of the two currents into the first input and the output of the amplifier then makes a voltage excursion in the said predetermined direction, and when the alternating voltage makes an excursion of predetermined magnitude in the opposite sense the current into the first input is reduced to zero and the output of the amplifier again makes a voltage excursion in the said predetermined direction.

8.     An input circuit as claimed in any one of the preceding claims, wherein the said sharp edge is the trailing edge of each dialling signal, and the first detector means include delay means which serve to delay switching of the output of the first detector means to the first predetermined condition until sufficient time has elapsed from commencement of a dialling signal for the output of the second detector means to assume the second predetermined condition.

9.     A circuit whose output voltage is made up of excursions in a single predetermined direction for both positive and negative excursions of an alternating voltage applied thereto, the circuit comprising an amplifier having first and second inputs, the amplifier being such that supplying the second input with a current which is equal in magnitude and of the same direction as current flowing into the first input or reducing the current supplied to the first input to zero or below causes an excursion in the said predetermined direction of the output voltage of the amplifier, first and second  resistive means connected to respective first and second inputs, the resistive means being such that the application of an a.c. voltage thereto causes a greater current to be supplied to the second input than to the first input, means for supplying a direct current to the first input, and means for applying an alternating voltage to the first and second resistive means, whereby when the alternating voltage makes an excursion of predetermined magnitude in one sense the current into the second input is greater than the sum of the two currents into the first input and the output of the amplifier then makes a voltage excursion in the said predetermined direction, and when the alternating voltage makes an excursion of predetermined magnitude in the opposite sense the current into the first input is reduced to zero and the output of the amplifier again makes a voltage excursion in the said predetermined direction.

10.    An input circuit for a telephone answering machine, the circuit being constructed, arranged and adapted to operate substantially as hereinbefore described with reference to, and as illustrated in, the accompanying drawings.

11.    A circuit whose output voltage is made up of excursions in a single predetermined direction for both positive and negative excursions of an alternating voltage applied thereto, the circuit being constructed, arranged and adapted to operate substantially as hereinbefore described with reference to, or as illustrated in, the accompanying drawings.

FIG.1

INPUT AMPLIFIER — 1

L1

L2

HIGH PASS FILTER — 13

DIAL DETECTOR — 5

PULSE STRETCH — 15

ATTENUATOR — 7

RING DETECTOR — 3

DELAY — 9

SCHMITT TRIGGER — 11

RINGING BUT NOT DIALING SIGNAL

FIG.2

0004709

FIG.3

FIG.4

0004709

# FIG. 4A

0004709

**European Patent Office**

**EUROPEAN SEARCH REPORT**

Application number

EP 79 30 0347

## DOCUMENTS CONSIDERED TO BE RELEVANT

| Category | Citation of document with indication, where appropriate, of relevant passages | Relevant to claim |
|---|---|---|
| | US - A - 3 859 464 (SEAMANS)<br>* Column 6, line 9 - column 7, line 13; figure * | 1 |
| | US - A - 3 816 669 (MERI)<br>* Column 4, line 38 - column 5, line 22; figures * | 1 |
| | US - A - 3 728 489 (BEACHAM)<br>* Column 2, line 48 - column 5, line 10; figure 2 * | 1 |
| | US - A - 3 683 122 (KALJU)<br>* Column 2, lines 19-34; figures * | 1 |

**CLASSIFICATION OF THE APPLICATION (Int. Cl.²)**

H 04 M 1/64

**TECHNICAL FIELDS SEARCHED (Int.Cl.²)**

H 04 M 1/64
1/65

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 18-06-1979 | KEPPENS |

EPO Form 1503.1   06.78